# EUROPEAN PATENT SPECIFICATION

(11) **EP 1 641 233 B1**
(45) Date of publication and mention of the grant of the patent: **15.08.2007**
(21) Application number: 05019331.7
(22) Date of filing: 06.09.2005
(51) Int. Cl.: H04M 15/00, H04M 3/42, H04M 15/28, H04Q 7/38

(54) **Connection management apparatus, connection management system and connection management method**
Verbindungsmanagementvorrichtung, Verbindungsmanagementsystem und Verbindungsmanagementverfahren
Appareil de gestion de connexion, système de gestion de connexion, et méthode de gestion de connexion

(30) Priority: 27.09.2004 JP 2004280136
(43) Date of publication of application: 29.03.2006
(73) Proprietor: NTT DoCoMo, Inc., Tokyo 100-6150 (JP)
(72) Inventor: Iinuma, Kei, c/o IP. Dpt., NTT DoCoMo, Inc., Chiyoda-ku, Tokyo 100-6150 (JP); Shimada, Keiko, c/o IP. Dept., NTT DoCoMo, Inc., Chiyoda-ku, Tokyo 100-6150 (JP); Yamaguchi,Hiroki, c/o IP Dpt., NTT DoCoMo, Inc., Chiyoda-ku, Tokyo 100-6150 (JP); Uno, Shigeto, c/o IP Dept., NTT DoCoMo, Inc., Chiyoda-ku, Tokyo 100-6150 (JP)
(74) Representative: GROSSE BOCKHORNI SCHUMACHER

(56) References cited:
- US-A- 5 898 915
- US-A- 6 044 259
- US-A1- 2002 176 405
- US-A1- 2003 073 426
- US-A1- 2003 158 812
- PATENT ABSTRACTS OF JAPAN vol. 018, no. 069 (E-1502), 4 February 1994 (1994-02-04) & JP 05 284255 A (HITACHI COMMUN SYST INC), 29 October 1993 (1993-10-29)
- PATENT ABSTRACTS OF JAPAN vol. 2003, no. 12, 5 December 2003 (2003-12-05) & JP 2004 193764 A (MATSUSHITA ELECTRIC IND CO LTD), 8 July 2004 (2004-07-08)

## Description

### BACKGROUND OF THE INVENTION

### Field of the Invention

The present invention relates to a connection management apparatus, a connection management system, and a connection management method.

### Related Background of the Invention

Japanese Patent Application Laid-Open No. 2004-193764 discloses the technology for preventing occurrence of too high communication charges in mobile communication terminals typified by cell phones, in which a user of each mobile communication terminal sets a maximum charge for communication fee and in which when the communication fee exceeds the maximum charge, the communication terminal is allowed to perform communication only with a specific communication destination preliminarily set by the user.
Document US2003158812 discloses that centralized billing is provided by processing requests for pre-paid and post-paid services at a service control point that is configured to prepare one or more associated event records. Event records associated with provided services can be stored at the service control point or in a remote database, or the service control point can direct the event records to a central billing system that is configured to bill subscribers directly or to transmit event records to one or more payment systems via a financial gateway. Service control point service logic is configured to permit negative account balances for post-paid subscribers, while account balances remain positive for pre-paid subscribers. Credit limits can be associated with post-paid subscribers, and service authorization can be based on such credit limits. No other related prior art is known

### SUMMARY OF THE INVENTION

In the case of the mobile communication terminal disclosed in above Japanese Patent Application Laid-Open No. 2004-193764, however, the maximum charge and the specific communication destination set by the user of the mobile communication terminal are stored only in a memory in the mobile communication terminal. Therefore, the mobile communication network side to which the mobile communication terminal is connected on the occasion of communication is unable to recognize these setting contents. Namely, the propriety of communication by the mobile communication terminal is left to how the user sets the contents. Therefore, the mobile communication network side cannot prevent eventualities due to nonpayment of fees or the like, for example.

In order to solve the above problem, an object of the present invention is to provide a connection management apparatus, a connection management system, and a connection management method by which the mobile communication network side can manage the connection destination of the mobile communication terminal when the communication usage fee of the mobile communication terminal exceeds the maximum charge.

A connection management apparatus of the present invention is an apparatus comprising: connection request receiving means for receiving a connection request message sent from a mobile communication terminal, from a mobile communication network to which the mobile communication terminal can be connected; maximum arrival determining means for determining whether maximum arrival information to indicate that a communication usage fee of the mobile communication terminal has arrived at a predetermined maximum charge, is set in the connection request message received by the connection request receiving means; and connection destination restricting means for restricting a connection destination of the mobile communication terminal corresponding to the connection request message, to a predetermined connection destination when the maximum arrival determining means determines that the maximum arrival information is set in the connection request message.

A connection management method of the present invention is a method comprising the following steps carried out by a connection management apparatus capable of communicating with a mobile communication terminal through a mobile communication network: a connection request receiving step of receiving a connection request message sent from the mobile communication terminal, from the mobile communication network; a maximum arrival determining step of determining whether maximum arrival information indicating that a communication usage fee of the mobile communication terminal has arrived at a predetermined maximum charge is set in the connection request message received in the connection request receiving step; and a connection destination restricting step of restricting a connection destination of the mobile communication terminal corresponding to the connection request message, to a predetermined connection destination when it is determined in the maximum arrival determining step that the maximum arrival information is set in the connection request message.

According to these aspects of the invention, when the maximum arrival information indicating that the communication usage fee of the mobile communication terminal has arrived at the predetermined maximum charge is set in the connection request message sent from the mobile communication terminal and received through the mobile communication network, the connection management apparatus is allowed to restrict the connection destination of the mobile communication terminal to the predetermined connection destination. Namely, the connection destination of the mobile communication terminal can be managed on the mobile communication network side when the communication usage fee of the mobile communication terminal exceeds the maximum charge. This enables the mobile communication network side to prevent the eventualities due to nonpayment of the communication usage fee or the like.

The connection management apparatus of the present invention is preferably configured as follows: it further comprises connectable address storing means for storing a connection destination address to which the mobile communication terminal can be connected; the connection destination restricting means restricts the connection destination of the mobile communication terminal to the connection destination address stored by the connectable address storing means, when the maximum arrival determining means determines that the maximum arrival information is set in the connection request message. By adopting this configuration wherein the connectable address storing means stores the connection destination address and wherein the connection destination of the mobile communication terminal is restricted to this connection destination address, it becomes feasible to readily manage the connection destination of the mobile communication terminal on the mobile communication network side.

The connection management apparatus of the present invention is preferably configured as follows: when the maximum arrival determining means determines that the maximum arrival information is not set in the connection request message, the connection destination restricting means sets the connection destination of the mobile communication terminal corresponding to the connection request message, to the connection destination included in the connection request message. This enables connection according to the connection request message, without restrictions on the connection destination of the mobile communication terminal, when the maximum arrival information is not set in the connection request message.

A connection management system of the present invention is a connection management system comprising a mobile communication network to which a mobile communication terminal can be connected, and a connection management apparatus which can be connected to the mobile communication network, wherein the mobile communication network comprises: connection request receiving means for receiving a connection request message sent from the mobile communication terminal; usage information acquiring means for acquiring usage information about communication usage of the mobile communication terminal having sent the connection request message; arrival information setting means for, when the usage information acquired by the usage information acquiring means indicates that a communication usage fee of the mobile communication terminal has arrived at a predetermined maximum charge, setting maximum arrival information indicating that the communication usage fee has arrived at the maximum charge, in the connection request message; and connection request transmitting means for transmitting the connection request message with the maximum arrival information set by the arrival information setting means or the connection request message received by the connection request receiving means, to the connection management apparatus, and wherein the connection management apparatus comprises: maximum arrival determining means for determining whether the maximum arrival information is set in the connection request message received from the mobile communication network; and connection destination restricting means for restricting a connection destination of the mobile communication terminal corresponding to the connection request message, to a predetermined connection destination when the maximum arrival determining means determines that the maximum arrival information is set in the connection request message.

According to this aspect of the invention, the mobile communication network is allowed to acquire the communication usage information of the mobile communication terminal having sent the connection request message and to set the maximum arrival information indicating the arrival of the communication usage fee at the maximum charge, in the connection request message when the communication usage fee of the mobile communication terminal exceeds the predetermined maximum charge. This permits the connection management apparatus to readily recognize whether the communication usage fee of the mobile communication terminal has arrived at the maximum charge, by determining whether the maximum arrival information is set in the connection request message. When the maximum arrival information is set in the connection request message received through the mobile communication network, the connection management apparatus is able to restrict the connection destination of the mobile communication terminal to the predetermined connection destination. Namely, the connection destination of the mobile communication terminal can be managed on the mobile communication network side when the communication usage fee of the mobile communication terminal exceeds the maximum charge. This enables the mobile communication network side to prevent the eventualities due to nonpayment of the communication usage fee or the like.

The connection management system of the present invention is preferably configured as follows: the usage information acquiring means transmits a terminal ID uniquely specifying the mobile communication terminal, which is included in the received connection request message, and receives the usage information generated based on the communication usage fee and the maximum charge for the communication usage fee preliminarily stored corresponding to the terminal ID. By preliminarily storing the usage fee and maximum charge corresponding to the terminal ID, the mobile communication network is allowed to make the usage information readily generated based on the communication usage fee and the maximum charge thereof stored corresponding to the terminal ID of the mobile communication terminal having sent the connection request message, and to make the maximum arrival information readily set using the usage information.

### Effect of the Invention

The connection management apparatus, connection management system, and connection management method according to the present invention enable the management of the connection destination of the mobile communication terminal on the mobile communication network side when the communication usage fee of the mobile communication terminal exceeds the maximum charge.

### BRIEF DESCRIPTION OF THE DRAWINGS

Fig. 1 is an illustration showing a system configuration of a connection management system in an embodiment of the invention.

Fig. 2 is a block diagram showing a functional configuration of a mobile communication network shown in Fig. 1.

Fig. 3 is a block diagram showing a functional configuration of a subscriber information server shown in Fig. 1.

Fig. 4 is an illustration showing a data configuration of a subscriber information database.

Fig. 5 is a block diagram showing a functional configuration of a connection management server shown in Fig. 1.

Fig. 6 is an illustration showing a data configuration of a connectable address table.

Fig. 7 is an illustration showing an example of screens displayed on a cell phone.

Fig. 8 is a flowchart showing a flow of connection management processing.

### DESCRIPTION OF THE PREFERRED EMBODIMENTS

Embodiments of the connection management apparatus, connection management system, and connection management method according to the present invention will be described below on the basis of the drawings. In the drawings the same elements will be denoted by the same reference symbols, without redundant description.

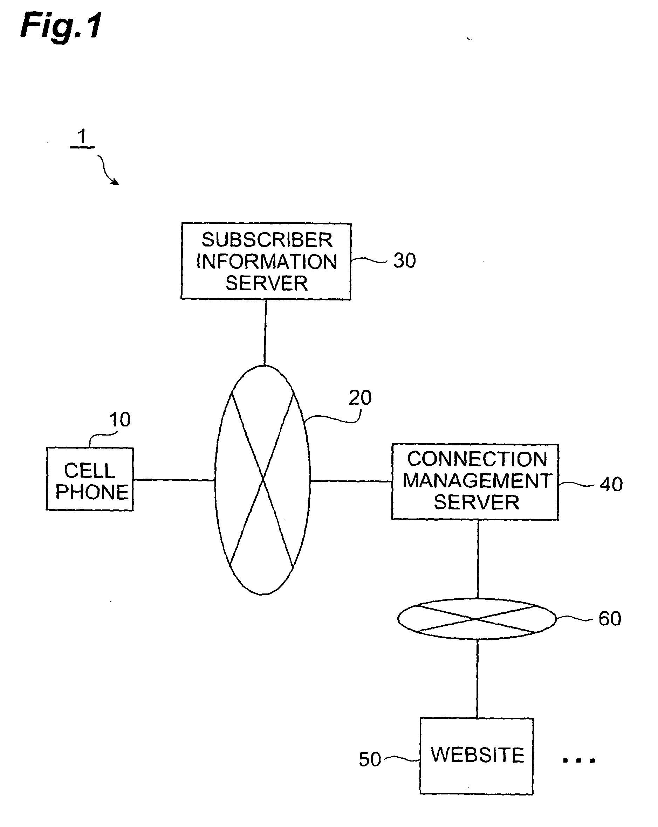

Fig. 1 is an illustration to illustrate a configuration of connection management system 1 in an embodiment. As shown in Fig. 1, the connection management system 1 has cell phone 10 (mobile communication terminal), mobile communication network 20, subscriber information server 30, connection management server 40 (connection management apparatus), and website 50. The connection management server 40 and website 50 are connected through communication line 60 such as the Internet.

The cell phone 10 is a mobile communication terminal that receives a telephone call service or a packet communication service through wireless communication with a base station (not shown) of mobile communication network 20 covering a wireless communication area in which the terminal itself is located. The present embodiment is described using the cell phone 10 as a specific example of the mobile communication terminal, but specific examples of the mobile communication terminal are not limited to this example; for example, the specific examples may include the mobile communication terminals such as the Personal Handyphone System (PHS) or the Personal Digital Assistant (PDA) with communication functionality.

The mobile communication network 20 is comprised of base stations, switches (not shown), and so on. The subscriber information server 30 is an apparatus that manages information about the owner or subscriber of cell phone 10. The connection management server 40 is an apparatus that manages the connection destination in connection of cell phone 10 with website 50. The subscriber information server 30 and connection management server 40 are servers that can be connected with the mobile communication network 20 and that are managed on the mobile communication network 20 side.

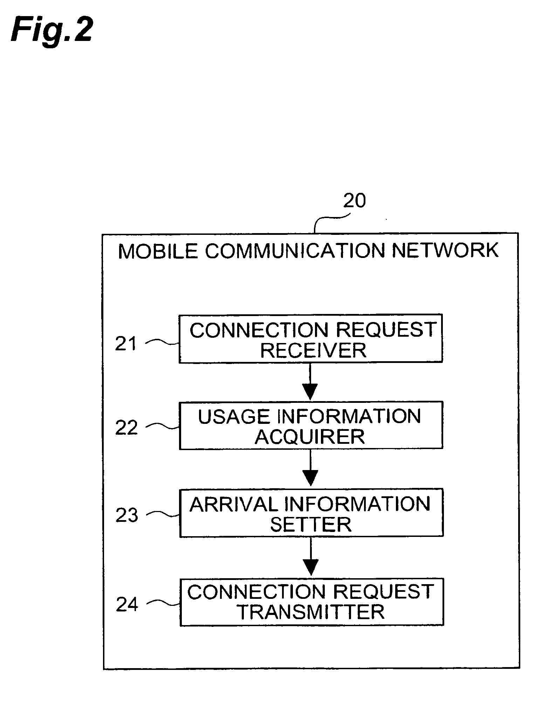

Next, the functional configuration of mobile communication network 20 will be described with reference to Fig. 2. As shown in Fig. 2, the mobile communication network 20 is provided with connection request receiver 21 (connection request receiving means), usage information acquirer 22 (usage information acquiring means), arrival information setter 23 (arrival information setting means), and connection request transmitter 24 (connection request transmitting means). These functions of mobile communication network 20 may be configured on a switch of mobile communication network 20 or on a server unit to which the switch can be connected.

The connection request receiver 21 receives a connection request message transmitted from cell phone 10. This connection request message is a signal that, for example, when the user selects a URL (Uniform Resource Locator) displayed or entered on a screen of cell phone 10, is originated from the cell phone 10 to a connection destination designated by this URL; for example, it corresponds to an HTTP request message. The connection request message includes, for example, the URL of the connection request destination and a phone number (terminal ID) of cell phone 10.

The usage information acquirer 22 acquires usage information about communication usage of cell phone 10 having sent the connection request message, from the subscriber information server 30. Specifically, for example, the usage information acquirer 22 transmits the phone number of cell phone 10 having sent the connection request message, to the subscriber information server 30, and receives from the subscriber information server 30, the usage information generated based on a usage fee and a maximum charge preliminarily stored corresponding to the phone number of cell phone 10 as described hereinafter. The usage information corresponds, for example, to information indicating that the usage fee has already arrived at the maximum charge, information indicating that the usage fee has not arrived at the maximum charge yet, or the like. The usage information does not always have to be acquired from the subscriber information server 30, but it may be acquired, for example, from a subscriber information database provided in the mobile communication network 20.

When the usage information acquired by the usage information acquirer 22 indicates that the usage fee of cell phone 10 has already arrived at the maximum charge, the arrival information setter 23 sets the maximum arrival information indicating that the usage fee of cell phone 10 has arrived at the maximum charge, in the connection request message. Specifically, for example, the arrival information setter 23 determines whether the usage information is information indicating that the usage fee of cell phone 10 has already arrived at the maximum charge. When the usage information is determined to be the information indicating that the usage fee of cell phone 10 has already arrived at the maximum charge, the arrival information setter 23 sets the maximum arrival information in the connection request message. A specific setting method of the maximum arrival information is, for example, as follows: where the connection request message is an HTTP request message, the maximum arrival information (e.g., "X-DCMLimitOver:ON") is added to the header part of the HTTP request.

The connection request transmitter 24 transmits the connection request message received by the connection request receiver 21, to the connection management server 40. When the maximum arrival information is set in the connection request message by the arrival information setter 23, the connection request message including the maximum arrival information is transmitted to the connection management server 40.

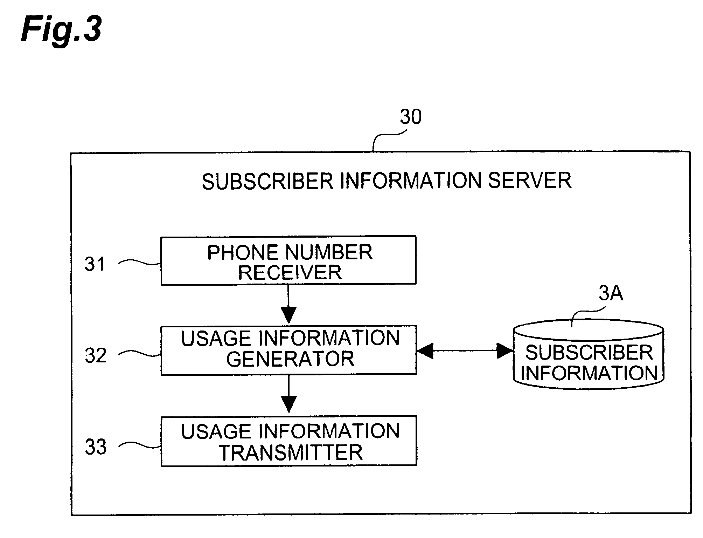

Next, the functional configuration of the subscriber information server 30 will be described with reference to Fig. 3. As shown in Fig. 3, the subscriber information server 30 is provided with phone number receiver 31, usage information generator 32, and usage information transmitter 33. The subscriber information server 30 is also provided with subscriber information database 3A to which the usage information generator 32 refers.

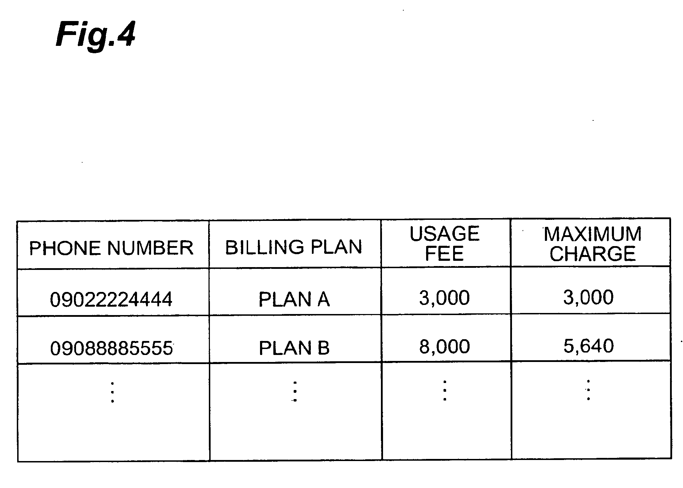

A data configuration of the subscriber information database 3A will be described below with reference to Fig. 4. The subscriber information database 3A has, for example, the following data items: phone number, billing plan, maximum charge, and usage fee. The phone number includes a record of an identification ID for uniquely specifying each cell phone 10, e.g., "09022224444." The billing plan includes a record of a billing plan subscribed by each subscriber, e.g., "plan A" or "plan B." The maximum charge includes a record of a usage limit charge set for each billing plan, i.e., a maximum charge for usage fee, e.g., "3,000" or "8,000". This maximum charge is information that can be rewritten by the user. The usage fee includes a record of the sum of communication usage fees resulted from communication of cell phone 10, e.g., "3,000" or "5,640." This usage fee is cleared, for example, to 0 every month.

The phone number receiver 31 shown in Fig. 3 receives the phone number of cell phone 10 sent from the mobile communication network 20.

The usage information generator 32 searches the subscriber information database 3A, based on the phone number received by the phone number receiver 31, to extract the usage fee and maximum charge stored corresponding to this phone number. The usage information generator 32 generates the aforementioned usage information, based on the extracted usage fee and maximum charge.

In this manner, the usage information generator 32 is able to readily generate the usage information, based on the usage fee and maximum charge stored corresponding to the phone number of cell phone 10 having sent the connection request message, through the use of the subscriber information database 3A. The generated usage information is transmitted to the mobile communication network 20, whereby the mobile communication network 20 side becomes able to readily set the maximum arrival information through the use of the usage information.

The usage information transmitter 33 transmits the usage information generated by the usage information generator 32, to the mobile communication network 20.

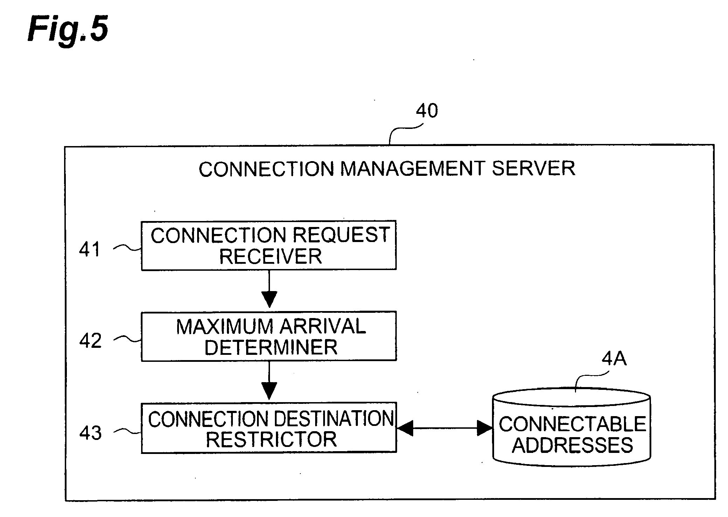

Next, the functional configuration of the connection management server 40 will be described with reference to Fig. 5. As shown in Fig. 5, the connection management server 40 is provided with connection request receiver 41 (connection request receiving means), maximum arrival determiner 42 (maximum arrival determining means), and connection destination restrictor 43 (connection destination restricting means). The connection management server 40 is also provided with connectable address table 4A (connectable address storing means) to which the connection destination restrictor 43 refers.

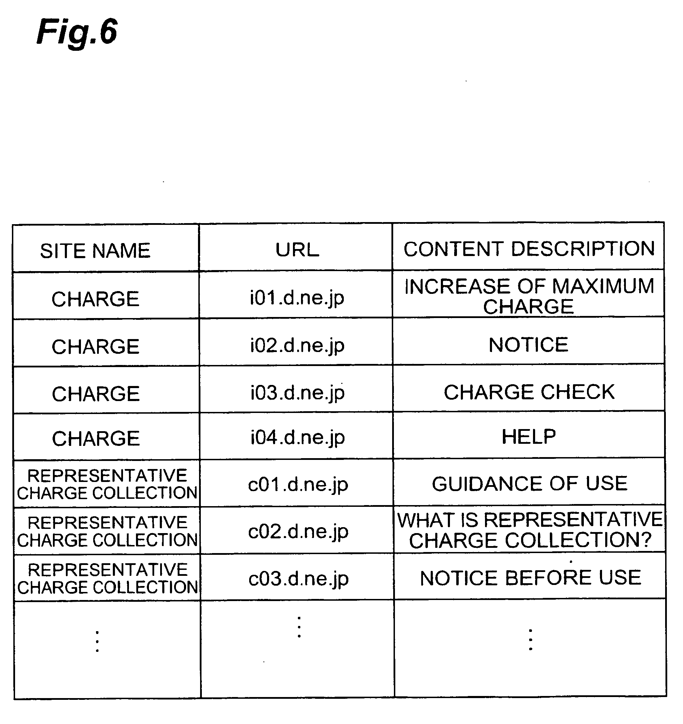

A data configuration of the connectable address table 4A will be described below with reference to Fig. 6. The connectable address table 4A has, for example, the following data items: site name, URL, and content description. The site name includes a record of a site name on website 50 to which cell phone 10 is connected, e.g., "charge" or "representative charge collection." The URL item includes a record of a URL as a connection destination address of each site to which cell phone 10 can be connected, e.g., "i01.d.ne.jp" The content description includes a record of an explanation about a content of each connection destination site, e.g., "increase of maximum charge" or "notice."

The connection request receiver 41 shown in Fig. 5 receives the connection request message sent from cell phone 10 via the mobile communication network 20.

The maximum arrival determiner 42 determines whether the aforementioned maximum arrival information is set in the connection request message received by the connection request receiver 41.

When the maximum arrival determiner 42 determines that the maximum arrival information is set in the connection request message, the connection destination restrictor 43 restricts the connection destination of cell phone 10 having sent the connection request message, to connection destination addresses stored in URLs of the connectable address table 4A. Namely, in this situation the cell phone 10 is allowed to be connected to only the connection destination addresses stored in the URLs of the connectable address table 4A.

By adopting this configuration wherein the URLs are stored in the connectable address table 4A and wherein the connection destination of cell phone 10 is restricted to the URLs, it becomes feasible to readily manage the connection destination of cell phone 10 on the mobile communication network 20 side. Namely, the mobile communication network 20 side is able to readily control the connection destination of cell phone 10 whose communication usage fee exceeds the maximum charge, by modifying the URLs in the connectable address table 4A.

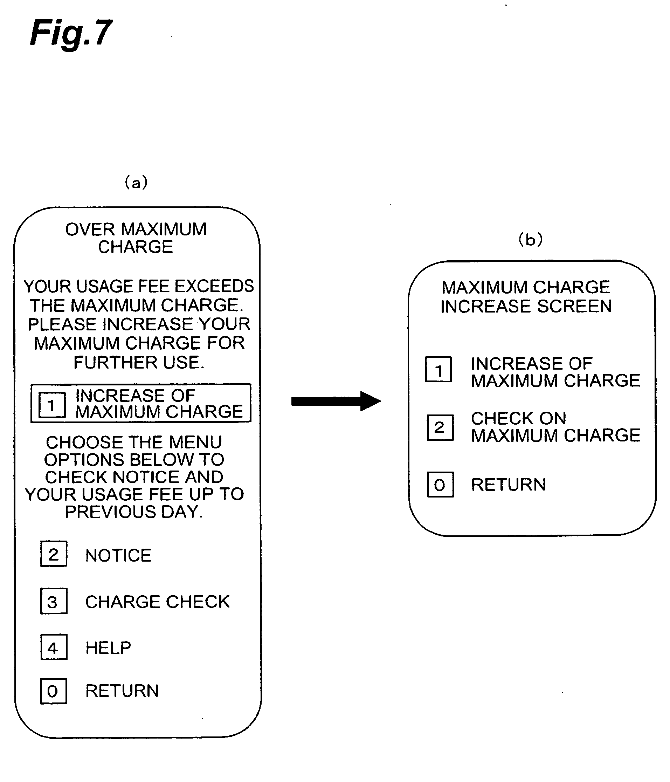

Fig. 7(a) shows a screen example displayed on a display of cell phone 10 when the connection destination restrictor 43 restricts its connection destination. As shown in Fig. 7(a), the connection management server apparatus 40 restricts the connection destination, for example, to the following sites: a maximum charge increase screen permitting an increase of the maximum charge, a notice screen to display a notice to the user, a charge check screen permitting a check on the usage fee of the user up to the previous day, a help screen, and so on. If the user selects and determines the "maximum charge increase" shown in Fig. 7(a), the screen will be transferred to the maximum charge increase screen shown in Fig. 7(b). The screen first displayed when the connection destination is restricted by the connection destination restrictor 43 does not have to be limited to the screen exemplified in Fig. 7(a), but may be, for example, the maximum charge increase screen exemplified in Fig. 7(b).

Even in the case where the communication usage fee has arrived at the maximum charge to result in the restrictions on the connection destination, the cell phone 10 is allowed to shift to the maximum charge increase screen. Therefore, the user can increase the maximum charge for the communication usage fee anytime through the use of the cell phone 10 connected to the website. Once the user increases the maximum charge, the cell phone 10 is again allowed to access every site. Therefore, the connection management system 1 in the present embodiment permits the mobile communication network 20 side to manage the connection destination of cell phone 10, and also enables the user to release the restrictions on the connection destination on the basis of a user's will if the usage fee exceeds the maximum charge.

When the maximum arrival determiner 42 determines that the maximum arrival information is not set in the connection request message, the connection destination restrictor 43 sets the connection destination of cell phone 10 having sent the connection request message, to the connection destination address set in the connection request message. Namely, in this situation the cell phone 10 is allowed to access each website 50 according to the connection request message, without restrictions on the connection destination.

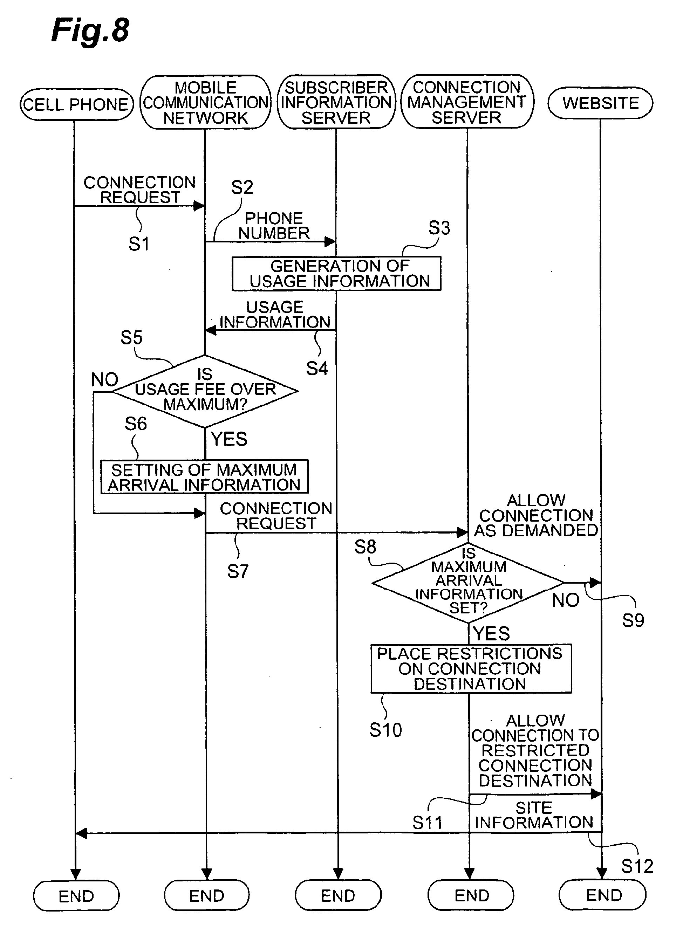

Next, the flow of connection management processing executed in the connection management system 1 will be described with reference to Fig. 8.

As shown in Fig. 8, cell phone 10 first sends a connection request message in accordance with an operation command given by the user (step S1). Next, the connection request receiver 21 of the mobile communication network 20 receives the connection request message sent from the cell phone 10. The usage information acquirer 22 of the mobile communication network 20 transmits the phone number of cell phone 10 having sent the connection request message, to the subscriber information server 30 (step S2).

Next, the phone number receiver 31 of the subscriber information server 30 receives the phone number of cell phone 10 transmitted from the mobile communication network 20. The usage information generator 32 of the subscriber information server 30 searches the subscriber information database 3A, based on the phone number of cell phone 10, to extract the usage fee and maximum charge stored corresponding to this phone number. Then the usage information generator 32 generates the usage information, based on the extracted usage fee and maximum charge (step S3).

Subsequently, the usage information transmitter 33 of the subscriber information server 30 transmits the usage information generated by the usage information generator 32, to the mobile communication network 20 (step S4).

Next, the usage information acquirer 22 of the mobile communication network 20 receives the usage information from the subscriber information server 30. The arrival information setter 23 of the mobile communication network 20 determines whether the usage information acquired by the usage information acquirer 22 is the information indicating that the usage fee of the cell phone 10 has already arrived at the maximum charge (step S5). When this determination is NO (step S5; NO), the processing shifts to step S7 described later.

On the other hand, when the determination at step S5 is that the usage information is determined to be the information indicating that the usage fee of the cell phone 10 has already arrived at the maximum charge (step S5; YES), the arrival information setter 23 sets the maximum arrival information in the connection request message (step S6).

Next, the connection request transmitter 24 of the mobile communication network 20 transmits the connection request message to the connection management server 40 (step S7).

Subsequently, the connection request receiver 41 of the connection management server 40 receives the connection request message sent from the mobile communication network 20. The maximum arrival determiner 42 of the connection management server 40 determines whether the maximum arrival information is set in the connection request message (step S8). When this determination is NO (step S8; NO), the connection destination restrictor 43 sets the connection destination of the cell phone 10 having sent the connection request message, to the connection destination address set in the connection request message (step S9). This results in permitting the cell phone 10 to access each website 50 in accordance with the connection request message and to acquire desired site information (step S12).

On the other hand, when the determination at step S8 is that the maximum arrival information is determined to be set in the connection request message (step S8; YES), the connection destination restrictor 43 restricts the connection destination of the cell phone 10 having sent the connection request message, to the connection destination addresses stored in the URLs in the connectable address table 4A (step S11). This results in allowing the cell phone 10 to access only the restricted connection destination addresses and to acquire only restricted site information (step S12).

As described above, the connection management system 1 in the present embodiment permits the mobile communication network 20 to acquire the communication usage information of the cell phone 10 having sent the connection request message and to set the maximum arrival information indicating that the communication usage fee has arrived at the maximum charge, in the connection request message when the usage information is the information indicating that the communication usage fee of the cell phone 10 has arrived at the predetermined maximum charge. This enables easy recognition on whether the communication usage fee of cell phone 10 has arrived at the maximum charge, by determining whether the maximum arrival information is set in the connection request message.

When the maximum arrival information is set in the connection request message received through the mobile communication network 20, the connection management server 40 is able to restrict the connection destination of the cell phone 10 to the predetermined connection destination. Namely, the connection destination of cell phone 10 can be managed on the mobile communication network 20 side when the communication usage fee of the cell phone 10 exceeds the maximum charge. This permits the mobile communication network 20 side to prevent the eventualities due to nonpayment of communication usage fees or the like.

In the embodiment described above, the maximum arrival information is set in the connection request message by the mobile communication network 20, but the maximum arrival information may be set in the connection request message by any other setting method, without having to be limited to it. For example, when the mobile communication network 20 determines that the communication usage fee first arrives at the maximum charge in a billing target period (e.g., each month), the mobile communication network 20 notifies the cell phone 10 of the fact, and the maximum arrival information is set in the connection request message on the cell phone 10 side when the cell phone 10 sends a next or subsequent connection request message during the same billing target period. It is also possible to adopt, for example, a configuration wherein the connection management server 40 is provided with each of the functions 21 to 24 of the mobile communication network 20 and wherein the connection management server 40 sets the maximum arrival information in the connection request message. However, when the system is constructed in the same manner as the connection management system 1 in the above-described embodiment, it can avoid such processing as the process for the connection management server 40 to be connected to the subscriber information server 30, which can reduce the load on the connection management server 40 and thus increase the processing efficiency.

In the above-described embodiment the connection destination of cell phone 10 is restricted in the case where the communication usage fee has arrived at the maximum charge, but the condition for the restrictions on the connection destination is not limited to the case where the communication usage fee has arrived at the maximum charge. For example, it may be applied to a case where the connection destination is restricted according to a subscribed billing plan.

## Claims

1. A connection management apparatus (40) comprising:
connection request receiving means (41) for receiving a connection request message sent from a mobile communication terminal, from a mobile communication network to which the mobile communication terminal can be connected;
**characterized by**
maximum arrival determining means (42) for determining whether maximum arrival information to indicate that a communication usage fee of the mobile communication terminal has arrived at a predetermined maximum charge, is set in the connection request message received by the connection request receiving means; and
connection destination restricting means (43) for restricting a connection destination of the mobile communication terminal corresponding to the connection request message, to a predetermined connection destination when the maximum arrival determining means determines that the maximum arrival information is set in the connection request message.

2. The connection management apparatus (40) according to Claim 1, further comprising connectable address storing means (4A) for storing a connection destination address to which the mobile communication terminal can be connected,
wherein when the maximum arrival determining means (42) determines that the maximum arrival information is set in the connection request message, the connection destination restricting means (43) restricts the connection destination of the mobile communication terminal to the connection destination address stored by the connectable address storing means (4A).

3. The connection management apparatus (40) according to Claim 1, wherein when the maximum arrival determining means (42) determines that the maximum arrival information is not set in the connection request message, the connection destination restricting means (43) sets the connection destination of the mobile communication terminal corresponding to the connection request message, to the connection destination included in the connection request message.

4. A connection management system (1) comprising a mobile communication network (20) to which a mobile communication terminal (10) can be connected, and a connection management apparatus (40) which can be connected to the mobile communication network,
wherein the mobile communication network comprises:
connection request receiving means (21) for receiving a connection request message sent from the mobile communication terminal;
usage information acquiring means (22) for acquiring usage information about communication usage of the mobile communication terminal having sent the connection request message; **characterized by**
arrival information setting means (23) for, when the usage information acquired by the usage information acquiring means (22) indicates that a communication usage fee of the mobile communication terminal has arrived at a predetermined maximum charge, setting maximum arrival information indicating that the communication usage fee has arrived at the maximum charge, in the connection request message; and
connection request transmitting means (24) for transmitting the connection request message with the maximum arrival information set by the arrival information setting means (23) or the connection request message received by the connection request receiving means (21), to the connection management apparatus, and
wherein the connection management apparatus (40) comprises:
maximum arrival determining means (42) for determining whether the maximum arrival information is set in the connection request message received from the mobile communication network; and
connection destination restricting means (43) for restricting a connection destination of the mobile communication terminal corresponding to the connection request message, to a predetermined connection destination when the maximum arrival determining means determines that the maximum arrival information is set in the connection request message.

5. The connection management system (1) according to Claim 4, wherein the usage information acquiring means (22) transmits a terminal ID uniquely specifying the mobile communication terminal (20), which is included in the received connection request message, and receives the usage information generated based on the communication usage fee and the maximum charge for the communication usage fee preliminarily stored corresponding to the terminal ID.

6. A connection management method comprising the following steps carried out by a connection management apparatus capable of communicating with a mobile communication terminal through a mobile communication network:
a connection request receiving step (S1) of receiving a connection request message sent from the mobile communication terminal, from the mobile communication network;
**characterized by**
a maximum arrival determining step (S8) of determining whether maximum arrival information indicating that a communication usage fee of the mobile communication terminal has arrived at a predetermined maximum charge is set in the connection request message received in the connection request receiving step; and
a connection destination restricting step (S10) of restricting a connection destination of the mobile communication terminal corresponding to the connection request message, to a predetermined connection destination when it is determined in the maximum arrival determining step that the maximum arrival information is set in the connection request message.

## Patentansprüche

1. Verbindungsmanagementvorrichtung (40) aufweisend: Mittel zum Empfang einer Verbindungsanforderung (41), um eine Verbindungsanforderungsnachricht zu empfangen, die von einem mobilen Kommunikationsendgerät gesendet wird aus einem mobilen Kommunikationsnetz, mit welchem das mobile Kommunikationsendgerät verbunden werden kann;
**gekennzeichnet durch**
Mittel (42) zur Bestimmung einer maximalen Ankunft, um zu bestimmen, ob eine Information über eine maximale Ankunft, welche angibt, dass eine Kommunikationsverwendungsgebühr des mobilen Kommunikationsendgerätes bei einer vorbestimmten maximalen Belastung angekommen ist, in der Verbindungsanforderungsnachricht eingestellt ist, welche **durch** die Mittel zum Empfang der Verbindungsanforderung empfangen wird; und
Mittel (43) zur Bestimmung des Verbindungsziels, um ein Verbindungsziel des mobilen Kommunikationsendgerätes, das der Verbindungsanforderungsnachricht entspricht, auf ein vorbestimmtes Verbindungsziel zu beschränken, wenn das Mittel zur Bestimmung der maximalen Ankunft bestimmt, dass die maximale Ankunftsinformation in der Verbindungsanforderungsnachricht eingestellt ist.

2. Verbindungsmanagementvorrichtung (40) nach Anspruch 1 ferner aufweisend Mittel (4A) zur Speicherung verbindbarer Adressen, um eine Verbindungszieladresse zu speichern, mit welcher das mobile Kommunikationsendgerät verbunden werden kann,
worin, wenn das Mittel (42) zur Bestimmung der maximalen Ankunft bestimmt, dass die Information über die maximale Ankunft in der Verbindungsanforderungsnachricht eingestellt ist, das Mittel (43) zur Beschränkung des Verbindungsziels das Verbindungsziel des mobilen Kommunikationsendgerätes auf die Verbindungszieladresse einschränkt, welche in den Mitteln (4A) zur Speicherung der verbindbaren Adresse gespeichert ist.

3. Verbindungsmanagementvorrichtung (40) nach Anspruch 1, worin, wenn das Mittel (42) zur Bestimmung der maximalen Ankunft bestimmt, dass die Information über die maximale Ankunft nicht in der Verbindungsanforderungsnachricht eingestellt ist, das Mittel (43) zur Beschränkung des Verbindungsziels das Verbindungsziel des mobilen Kommunikationsendgerätes entsprechend der Verbindungsanforderungsnachricht auf das Verbindungsziel, welches in der Verbindungsanforderungsnachricht enthalten ist, einstellt.

4. Verbindungsmanagementsystem (1), welches ein mobiles Kommunikationsnetz (20) enthält, mit welchem ein mobiles Kommunikationsendgerät (10) verbunden werden kann und eine Verbindungsmanagementvorrichtung (40), welche mit dem mobilen Kommunikationsnetz verbunden werden kann,
worin das mobile Kommunikationsnetz aufweist:
Mittel (21) zum Empfang einer Verbindungsanforderung, um eine Verbindungsanforderungsnachricht zu empfangen, welche von dem mobilen Kommunikationsendgerät gesendet wird;
Mittel (22) zum Bezug von Verwendungsinformation, um Verwendungsinformation über eine Kommunikationsverwendung des mobilen Kommunikationsendgerätes zu beziehen, welches die Verbindungsanforderungsnachricht gesendet hat; **gekennzeichnet durch**
Mittel (23) zur Einstellung einer Ankunftsinformation, um, wenn die Verwendungsinformation, welche **durch** das Mittel (22) zum Bezug der Verwendungsinformation anzeigt, dass eine Kommunikationsverwendungsgebühr des mobilen Kommunikationsendgerätes bei einer maximalen Belastung angekommen ist, die Information über die maximale Ankunft einzustellen, welche angibt, dass die Kommunikationsverwendungsgebühr bei der maximalen Belastung angekommen ist, in der Verwendungsanforderungsnachricht; und
Mittel (24) zum Senden einer Verbindungsanforderung, um die Verbindungsanforderungsnachricht mit der Information über die maximale Ankunft, welche **durch** das Mittel (23) zur Einstellung der Ankunftsinformation eingestellt ist, oder die Verbindungsanforderungsnachricht, welche **durch** das Mittel (21) zum Empfangen der Verbindungsanforderung empfangen wurde, an die Verbindungsmanagementvorrichtung zu senden, und
worin die Verbindungsmanagementvorrichtung (40) aufweist:
Mittel (42) zur Bestimmung der maximalen Ankunft, um zu bestimmen, ob die Information über die maximale Ankunft in der Verbindungsnachricht eingestellt ist, welche vom mobilen Kommunikationsnetz empfangen wird; und
Mittel (43) zur Beschränkung des Verbindungsziels, um ein Verbindungsziel des mobilen Kommunikationsendgerätes, das der Verbindungsanforderungsnachricht entspricht, auf ein vorbestimmtes Verbindungsziel einzustellen, wenn das Mittel zur Bestimmung der maximalen Ankunft bestimmt, dass die Information über die maximale Ankunft in der Verbindungsanforderungsnachricht eingestellt ist.

5. Verbindungsmanagementsystem (1) nach Anspruch 4, worin das Mittel (22) zum Bezug der Verwendungsinformation eine Endgeräte-ID sendet, welche eindeutig das mobile Kommunikationsendgerät (20) bezeichnet, welche in der empfangenen Verbindungsanforderungsnachricht enthalten ist, und die Verwendungsinformation empfängt, welche basierend auf der Kommunikationsgebühr und der maximalen Belastung für die Kommunikationsverwendungsgebühr eingestellt ist, die zuvor in Bezug auf die Endgeräte-ID gespeichert wurde.

6. Verbindungsmanagementverfahren, das die folgenden Schritte aufweist, welche durch eine Verbindungsmanagementvorrichtung ausgeführt werden, die in der Lage ist, mit einem mobilen Kommunikationsendgerät über ein mobiles Kommunikationsnetz zu kommunizieren:
einen Schritt (S1) zum Empfang einer Verbindungsanforderung, um eine Verbindungsanforderungsnachricht zu empfangen, die vom mobilen Kommunikationsendgerät gesendet wird, vom mobilen Kommunikationsnetz;
**gekennzeichnet durch**
einen Schritt S8 zur Bestimmung einer maximalen Ankunft, um zu bestimmen, ob eine Information über eine maximale Ankunft, welche angibt, dass eine Kommunikationsverwendungsgebühr des mobilen Kommunikationsendgerätes bei einer vorbestimmten maximalen Belastung angekommen ist, in der Verbindungsanforderungsnachricht eingestellt ist, welche im Schritt zum Empfang der Verbindungsanforderung empfangen wird; und
einen Beschränkungsschritt S10 zur Einschränkung der Verbindung, um ein Verbindungsziel des mobilen Kommunikationsendgerätes, welches der Verbindungsanforderungsnachricht entspricht, auf ein vorbestimmtes Ziel zu beschränken, wenn es im Schritt zur Bestimmung der maximalen Ankunft bestimmt wird, dass die Information über die maximale Ankunft in der Verbindungsanforderungsnachricht eingestellt ist.

## Revendications

1. Un appareil de gestion de connexions (40) comprenant :
un moyen de réception de demande de connexion (41) pour recevoir un message de demande de connexion envoyé par un terminal de communication mobile, provenant d'un réseau de communication mobile auquel le terminal de communication mobile peut être connecté;
**caractérisé par**
un moyen de détermination d'arrivée au maximum (42) pour déterminer si une information d'arrivée au maximum, pour indiquer qu'une redevance de consommation de communication du terminal de communication mobile est arrivée à un montant maximal prédéterminé, est incorporée dans le message de demande de connexion reçu par le moyen de réception de demande de connexion; et
un moyen de restriction de destination de connexion (43) pour restreindre à une destination de connexion prédéterminée une destination de connexion du terminal de communication mobile correspondant au message de demande de connexion, lorsque le moyen de détermination d'arrivée au maximum détermine que l'information d'arrivée au maximum est incorporée dans le message de demande de connexion.

2. L'appareil de gestion de connexions (40) selon la revendication 1, comprenant en outre un moyen de stockage d'adresse pour laquelle la connexion est permise (4A), pour stocker une adresse de destination de connexion à laquelle le terminal de communication mobile peut être connecté,
dans lequel lorsque le moyen de détermination d'arrivée au maximum (42) détermine que l'information d'arrivée au maximum est incorporée dans le message de demande de connexion, le moyen de restriction de destination de connexion (43) restreint la destination de connexion du terminal de communication mobile à l'adresse de destination de connexion stockée par le moyen de stockage d'adresse pour laquelle la connexion est permise (4A).

3. L'appareil de gestion de connexions (40) selon la revendication 1, dans lequel lorsque le moyen de détermination d'arrivée au maximum (42) détermine que l'information d'arrivée au maximum n'est pas incorporée dans le message de demande de connexion, le moyen de restriction de destination de connexion (43) fixe la destination de connexion du terminal de communication mobile, correspondant au message de demande de connexion, à la destination de connexion incluse dans le message de demande de connexion.

4. Un système de gestion de connexions (1) comprenant un réseau de communication mobile (20) auquel un terminal de communication mobile (10) peut être connecté, et un appareil de gestion de connexions (40) qui peut être connecté au réseau de communication mobile,
dans lequel le réseau de communication mobile comprend:
un moyen de réception de demande de connexion (21) pour recevoir un message de demande de connexion envoyé par le terminal de communication mobile;
un moyen d'acquisition d'information de consommation (22) pour acquérir une information de consommation concernant la consommation de communication du terminal de communication mobile ayant envoyé le message de demande de connexion; **caractérisé par**
un moyen d'incorporation d'information d'arrivée (23) qui, lorsque l'information de consommation acquise par le moyen d'acquisition d'information de consommation (22) indique qu'une redevance de consommation de communication du terminal de communication mobile est arrivée à un montant maximal prédéterminé, incorpore dans le message de demande de connexion une information d'arrivée au maximum indiquant que la redevance de consommation de communication est arrivée au montant maximal; et
un moyen d'émission de demande de connexion (24) pour émettre vers l'appareil de gestion de connexions le message de demande de connexion avec l'information d'arrivée au maximum incorporée par le moyen d'incorporation d'information d'arrivée (23) ou le message de demande de connexion reçu par le moyen de réception de demande de connexion (21), et
dans lequel l'appareil de gestion de connexions (40) comprend :
un moyen de détermination d'arrivée au maximum (42) pour déterminer si l'information d'arrivée au maximum est incorporée dans le message de demande de connexion reçu du réseau de communication mobile; et
un moyen de restriction de destination de connexion (43) pour restreindre à une destination de connexion prédéterminée une destination de connexion du terminal de communication mobile correspondant au message de demande de connexion, lorsque le moyen de détermination d'arrivée au maximum détermine que l'information d'arrivée au maximum est incorporée dans le message de demande de connexion.

5. Le système de gestion de connexions (1) selon la revendication 4, dans lequel le moyen d'acquisition d'information de consommation (22) émet un identificateur de terminal désignant de façon spécifique le terminal de communication mobile (20), qui est inclus dans le message de demande de connexion reçu, et reçoit l'information de consommation basée sur la redevance de consommation de communication et le montant maximal pour la redevance de consommation de communication stocké préalablement, correspondant à l'identificateur de terminal.

6. Un procédé de gestion de connexions comprenant les étapes suivantes, exécutées par un appareil de gestion de connexions capable de communiquer avec un terminal de communication mobile par l'intermédiaire d'un réseau de communication mobile :
une étape de réception de demande de connexion (S1) consistant à recevoir du réseau de communication mobile un message de demande de connexion envoyé par le terminal de communication mobile;
**caractérisé par**
une étape de détermination d'arrivée au maximum (S8) consistant à déterminer si une information d'arrivée au maximum, indiquant qu'une redevance de consommation de communication du terminal de communication mobile est arrivée à un montant maximal prédéterminé, est incorporée dans le message de demande de connexion reçu à l'étape de réception de demande de connexion; et
une étape de restriction de destination de connexion (S10) consistant à restreindre à une destination de connexion prédéterminée une destination de connexion du terminal de communication mobile correspondant au message de demande de connexion, lorsqu'il est déterminé à l'étape de détermination d'arrivée au maximum que l'information d'arrivée au maximum est incorporée dans le message de demande de connexion.
